(19) Europäisches Patentamt / European Patent Office / Office européen des brevets

(11) **EP 3 378 880 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(51) Int Cl.:
*C08G 18/76* *(2006.01)*      *C08G 18/79* *(2006.01)*
*C08G 18/02* *(2006.01)*      *C08G 18/18* *(2006.01)*
*C08G 18/20* *(2006.01)*      *C08G 18/42* *(2006.01)*

(21) Anmeldenummer: **17162312.7**

(22) Anmeldetag: **22.03.2017**

(54) **PORÖSE MATERIALIEN AUF BASIS EINES POLYURETHAN-POLYISOCYANURATGEMISCHES ODER EINES POLYHARNSTOFF-POLYISOCYANURATGEMISCHES UND DEREN HERSTELLUNG UND VERWENDUNG**

POROUS MATERIALS BASED ON A POLYURETHANE POLYISOCYANURATE MIXTURE OR A POLYUREA POLYISOCYANURATE MIXTURE AND THEIR PRODUCTION AND USE

MATÉRIAUX POREUX À BASE D'UN MÉLANGE DE D'ISOCYANURATE/POLYURÉTHANE OU D'UN MÉLANGE D'ISOCYANURATE/POLYCARBAMIDE ET LEUR PRODUCTION ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.09.2018 Patentblatt 2018/39**

(73) Patentinhaber: **Covestro Deutschland AG**
**51373 Leverkusen (DE)**

(72) Erfinder:
• **HEINZ, Paul, Dr.**
**51375 Leverkusen (DE)**
• **ARNTZ, Hans-Detlef, Dr.**
**51491 Overath (DE)**
• **NEFZGER, Hartmut, Dr.**
**50259 Pulheim (DE)**
• **HERTEN, Mike, Dr.**
**41517 Grevenbroich (DE)**

(74) Vertreter: **Levpat**
**c/o Covestro AG**
**Gebäude 4825**
**51365 Leverkusen (DE)**

(56) Entgegenhaltungen:
**US-A- 5 869 545    US-A1- 2006 281 825**

**Beschreibung**

Die Erfindung betrifft poröse Materialien auf Basis eines Polyurethan- Polyisocyanuratgemisches oder eines Polyharnstoff- Polyisocyanuratgemisches, deren Herstellung und Verwendung.

Zu den porösen Materialien gehören beispielsweise Xerogele, Aerogele, Kryogele und Lyogele. Xerogele sind zum Beispiel poröse Feststoffe mit einer netzwerkartigen Struktur, die aus der Trocknung eines Gels durch Verdampfen des Lösungsmittels hervorgegangen sind. In Abgrenzung zu den Aerogelen weisen Xerogele während der Trocknung erhebliche Strukturänderungen auf, die mit Schrumpfungsprozessen und einer Abnahme der Porosität verbunden sind. Diese liegt bei Xerogelen im Regelfall um 50%, während Aerogele etwa 90% ihres ursprünglichen Volumens behalten.

Die Synthese von porösen Materialien im Sol-Gel-Verfahren bietet die Möglichkeit, nanoporöse Materialien mit außergewöhnlich guten Isoliereigenschaften herzustellen.

Polymerbasierte poröse Materialien, wie z.B. Xerogele stellen eine technisch interessante Materialklasse für Anwendungen im Bereich der Dämmstoffe dar. Dabei werden die Xerogele durch einen zweistufigen Prozess (Herstellung des Polymer-Gels und anschließende Trocknung des Polymer-Gels an der Luft) erhalten. Aerogele hingegen werden durch Austauschen des organischen Lösemittels gegen $CO_2$ und anschließende überkritische Trocknung erhalten. Die genannten Xero-oder Aerogele können zum Beispiel auf Basis von Polyurethan, Polyharnstoff und Polyisocyanurat oder Kombinationen daraus hergestellt werden.

Ein wichtiges Maß für die Qualität der erhaltenen Xerogele ist deren Volumenschrumpf, welcher durch das Kollabieren der nanoskaligen Poren in den Gelen aufgrund der Ausbildung von Kapillarkräften innerhalb der Porenwände hervorgerufen wird. Das bedeutet, dass je geringer der Schrumpf bei der Trocknung ausfällt, desto eher bleibt die innere Struktur der Gele intakt. Eine Verringerung oder Unterdrückung des Volumenschrumpfes und eine Verbesserung der Dämmeigenschaften kann durch geeignete Auswahl der Polymerbasis und der Ausgangskomponenten des Polymers beeinflusst werden.

In DE-A 19505046 werden organische Aerogele mit einer Dichte von 30 bis 300 g/l, einer Porengröße kleiner als 20 $\mu$m, einer Porosität von mindestens 70% und einer Porenfläche von 1 bis 150 m$^2$/g beschrieben. Sie werden durch Trimerisierung von organischen, gegebenenfalls modifizierten Polyisocyanaten in Gegenwart von Trimerisierungskatalysatoren unter Bildung eines Gels in einem organischen Lösungsmittel hergestellt. Das Lösungsmittel wird abschließend entfernt. Die Trimerisierung kann in Gegenwart von Verbindungen mit mindestens zwei gegenüber Isocyanatgruppen reaktiven Wasserstoffatomen durchgeführt werden. Der Schrumpf wird vermindert und die Rohdichte verringert, wenn das Verhältnis von Urethangruppen zu Isocyanuratgruppen verkleinert wird. Die Aerogele werden als Füllmaterial für Vakuumpanele verwendet.

WO 08/138978 beschreibt die Verwendung von mehrfunktionellen Isocyanaten, z.B. Diphenylmethandiisocyanat und mehrfunktionellen aromatischen Aminen, wie z.B. Diphenylmethandiamin zur Herstellung von Polyharnstoff basierten Xerogelen. Nachteil dieser porösen Materialien ist, dass die erhaltenen Xerogel-Materialien u.a. durch die Abwesenheit von Trimergruppen einen vergleichsweise hohen Volumenschrumpf und somit auch vergleichsweise hohe Dichten aufweisen. Die Xerogele werden als Dämmstoff in Vakuumisolationspaneelen eingesetzt.

Daher bestand die Aufgabe darin, poröse Materialien auf Kunststoffbasis zur Verfügung zu stellen, die die vor genannten Nachteile nicht aufweisen; insbesondere wenig Schrumpf während der Trocknung zeigen.

Diese Aufgabe konnte überraschend dadurch gelöst werden, dass antrimerisierte Polyisocyanate als Ausgangsverbindung für die Herstellung von porösen Materialien eingesetzt wurden. Besonders gute Ergebnisse wurden erzielt, wenn als Isocyanat reaktive Komponente vergleichsweise kurzkettige, hochfunktionelle und polare Polyesterpolyole, sowie di- oder Polyamine eingesetzt wurden.

Gegenstand der Erfindung sind Xerogele, Aerogele, Kryogele und Lyogele (poröse Materialien) auf Basis eines Polyurethan- Polyisocyanuratgemisches oder eines Polyharnstoff-Polyisocyanuratgemisches mit einer Dichte von ≤ 250 kg/ m$^3$, vorzugsweise von 100 bis 250 kg/m$^3$, wobei das Gemisch aus einem Reaktionsgemisch bestehend aus den folgenden Komponenten erhältlich ist

i) mindestens einer Isocyanat reaktiven Komponente aus der Gruppe bestehend aus Polyaminen mit einer zahlenmittleren Funktionalität von ≥2 bis 6,5 und einem zahlenmittleren Molekulargewicht von 100 bis 1000 g/mol, besonders bevorzugt von 100 bis 500 g/mol, Polyesterpolyolen mit einer zahlenmittleren Funktionalität von ≥ 1,8 bis ≤ 6,5 und Hydroxylzahlen 50 bis 600 mg KOH/g, Polyetheresterpolyolen mit einer zahlenmittleren Funktionalität von ≥ 1,8 bis ≤ 6,5 und Hydroxylzahlen 50 bis 600 mg KOH/g und Polycarbonatpolyolen mit einer Funktionalität von 2 und Hydroxylzahlen 50 bis 600 mg KOH/g und Kombinationen daraus,

ii) mindestens einem antrimerisierten Polyisocyanat mit einem Isocyanuratgehalt von 15 bis 95 Gew.-%, bevorzugt zwischen 20 und 80 Gew.-%, besonders bevorzugt zwischen 30 und 50 Gew.-%, bezogen auf die Summe der Anzahl der Isocyanatgruppen und der Isocyanuratgruppen, aus der Gruppe bestehend aus Diphenylmethandiisocyanat (MDI), dessen Isomeren und höheren Homologen (pMDI) sowie Mischungen daraus, Toluoldiisocyanat (TDI) und dessen Isomeren und Gemischen daraus, 1,6-Hexamethylendiisocyanat (HDI), Isophorondiisocyanat (IPDI), hydriertes Dipenylmethandiisocyanat (HMDI), dessen Isomeren und höheren Homologen sowie Mischungen daraus, 1,5-Pentandiisocyanat (PDI) und 1,3-Xylendiisocyanat (XDI) sowie Abmischungen aus den Komponenten der Gruppe

iii) gegebenenfalls polyfunktionellen Aminen, Alkoholen und Hydroxyaminen mit Molekulargewichten kleiner als 400 g/mol, vorzugsweise von 80 bis 300 g/mol,

in Gegenwart von

iv) gegebenenfalls einem oder mehreren Urethanisierungskatalysatoren,

v) gegebenenfalls einem oder mehreren Trimerisierungskatalysatoren,

wobei die Kennzahl (das Verhältnis der Anzahl der NCO-Gruppen zu der Anzahl an OH-Gruppen multipliziert mit 100) bei Einsatz von Polyolen als Komponente (i) 150 bis 500 beträgt und die Kennzahl (das Verhältnis der Anzahl der NCO-Gruppen zu der Anzahl an Amin-Gruppen multipliziert mit 100) bei Einsatz von Polyaminen als Komponente (i) 100 bis 150, bevorzugt 110 bis 130 beträgt.

Die erfindungsgemäßen porösen Materialien können vorzugsweise nach dem Sol-Gel-Verfahren hergestellt werden.

Ein weiterer Gegenstand der Erfindung ist daher ein Sol-Gel-Verfahren zur Herstellung der erfindungsgemäßen Xerogele, Aerogele, Kryogele und Lyogele (porösen Materialien) auf Basis eines Polyurethan- Polyisocyanuratgemisches oder eines Polyharnstoff- Polyisocyanuratgemisches , wobei

a) die Komponenten i) und ii) in einem organischen, trockenen, inerten Lösungsmittel oder Lösungsmittelgemisch vermischt werden,

b) gegebenenfalls der Mischung aus Schritt a) die Komponente iii) zugegeben wird,

c) gegebenenfalls zur Mischung aus Schritt b) die Komponente iv) und danach gegebenenfalls die Komponente v) zugegeben wird, so dass sich ein Gel ausbildet,

d) das in Schritt c) gebildete Gel durch Stehenlassen gealtert wird,

e) das organische Lösungsmittel entfernt wird.

Als Lösungsmittel/Lösungsmittelgemisch eignen sich insbesondere organische Lösungsmittel mit einem Siedepunkt von unter 100°C. Die Lösungsmittel sollten trocken sein, also kein Wasser enthalten und gegenüber den Komponenten i) und ii) inert sein, also mit diesen Komponenten nicht reagieren. Die Komponenten sollten im Lösungsmittel löslich sein, wohingegen das gebildete Gel nicht darin löslich sein sollte. Besonders bevorzugt als Lösungsmittel sind Ketone, wie beispielsweise Aceton, Dichlormethan, Chloroform, Diethylether, Ethylacetat und sonstige an sich bekannte organische Lösungsmittel.

Vor der Entfernung des Lösungsmittels liegen die Gele bevorzugt in einer Konzentration von 5 bis 25 Gew.-%, besonders bevorzugt von 10 bis 20 Gew.-% vor.

Die Alterung kann beispielsweise bei Temperaturen zwischen -20 und 50°C - in Abhängigkeit vom Lösungsmittel - innerhalb von 1 bis 48 Stunden erfolgen.

Die Entfernung des Lösungsmittels kann auf verschiedene Weise erfolgen:

A) Das Lösungsmittel kann z.B. unter Normaldruck oder Unterdruck bei Temperaturen, die über dem Siedepunkt des entsprechenden Lösungsmittels bei eingestelltem Druck liegen, verdampft werden.

B) Das Lösungsmittel wird durch eine andere Flüssigkeit ersetzt, die dann entfernt wird.

C) Das Lösungsmittel wird bei überkritischen Bedingungen (wie z.B. Druck, Temperatur) entfernt.

D) Das Lösungsmittel wird durch eine andere Flüssigkeit ersetzt, welche anschließend bei überkritischen Bedingungen (wie z.B. Druck, Temperatur) entfernt wird.

E) Das Lösungsmittel wird durch Lyophilisieren entfernt.

Die erfindungsgemäßen Xerogele, Aerogele, Kryogele und Lyogele (porösen Materialien) werden vorzugsweise zur Herstellung von Dämmmaterialien, Kernmaterialien für Vakuumisolationspaneele und Absorbentien verwendet.

Die Komponenten (iv) und (v) werden vorzugsweise bei Einsatz von Polyolen als Komponente (i) verwendet, wohingegen die Komponenten (iv) und (v) bei Einsatz von Polyaminen als Komponente (i) nicht notwendig sind.

Als Urethanisierungskatalysatoren können alle an sich bekannten Katalysatoren, die die Urethanbildung katalysieren, eingesetzt werden. Beispiele für derartige Katalysatoren sind im Kunststoffhandbuch, Band 7 (Polyurethane), 3., neu bearbeitete Auflage, Carl Hanser Verlag, München/Wien 1993, Seite 95 bis 119, insbesondere Seite 104 ff.

beschrieben und können in den üblichen Mengen eingesetzt werden. Sie werden auch in US 4 218 543 oder DE-OS 39 14 718 beschrieben. Beispielhaft seien tertiäre Amine, wie Diazobicyclo[2.2.2]octan, N-Methylimidazol, Dimethylamino- propylamin, 1,5-Diazabicyclo[4.3.0]non-5-en, und 1,8-Diazabicyclo[5.4.0]undec-7-en, sowie metallorganische Verbindungen, wie Titansalze, die Zinn(II)- oder Zinn(IV)-Salze höherer Carbonsäuren, z.B. Dialkylzinnalkylmercaptide, Dialkylzinncarboxylate, Zinn(II)-carboxylate, Dialkoxytitancarboxylate und Titanacetylacetonat, Zinkcarboxylate, sowie Salze des Wismuts genannt.

Als Trimerisierungskatalysatoren können alle an sich bekannten Katalysatoren, die die Trimerisierung des Isocyanates katalysieren, verwendet werden. Besonders geeignet für die Trimerisierung sind spezielle Phosphacyclen mit dreiwertigem P-Atom und salzartig aufgebaute Substanzen mit Kationen, die für eine gute Löslichkeit im Isocyanatmedium sorgen, besonders Tetraorganyl-ammonium und -phosphonium, und Anionen, die sich durch $H^+$-Abstraktion aus schwachen Säuren, wie z.B. Carbonsäuren, Phenolen, Alkoholen, Wasser, HF etc. ableiten. Fluoride, Hydrogendifluoride, Dihydrogentrifluoride und höhere Polyfluoride, wie auch die Anionen spezieller, fluorierte Alkylgruppen tragender Carbonsäuren sind geeignet. Geeignete Trimerisierungskatalysatoren sind weiterhin alkoholische Lösungen von Alkali- und Erdalkalioxiden, -hydroxiden, -alkoholaten sowie -phenolaten. Weiterhin eignen sich alkoholische Lösungen von Metallsalzen von Carbonsäuren, beispielsweise Kaliumacetat, Natriumbenzoat, Natriumacetat und Kaliumformiat sowie ferner tertiäre Phosphine, insbesondere solche, die das Phosphoratom als Teil eines Zyklus enthalten. Als Beispiele seien genannt: Quaternäre Ammoniumhydroxide, vorzugsweise N,N,N-Trimethyl-N-benzylammoniumhydroxid und N,N,N-Trimethyl-N-(2-hydroxypropyl)-ammoniumhydroxid. Quaternäre Ammonium- sowie Phosphonium-fluoride, - difluoride, -trifluoride und höhere -polyfluoride, wie sie durch einfaches Abmischen von quaternären Ammonium- sowie Phosphonium-fluoriden oder auch -hydroxiden mit entsprechenden Anteilen, optional in Alkoholen oder Wasser vorgelöster, HF bereitet werden können.

Beispiele geeigneter Polyisocyanate sind 1,5-Pentandiisocyanat (PDI), 1,6-Hexamethylendiisocyanat (HDI), Isophorondiisocyanat (IPDI), die Isomeren des Bis(-isocyanatocyclohexyl)methans (HMDI) oder deren Mischungen beliebigen Isomerengehalts, 2,4-und/oder 2,6-Toluylendiisocyanat (TDI), 2,2'-und/oder 2,4'- und/oder 4,4'-Diphenylmethandiisocyanat (MDI) und/oder höhere Homologe (pMDI) und 1,3-Bis-(isocyanatomethyl)benzol (XDI). Geeignete Polyisocyanate und Polyisocyanatgemische der Diphenylmethanreihe sind solche Polyisocyanate, wie sie bei der Phosgenierung von Anilin/Formaldehyd-Kondensaten gebildet werden. Der Begriff "Polyisocyanatgemisch der Diphenylmethanreihe" steht für beliebige Gemische von Polyisocyanaten der Diphenylmethanreihe, insbesondere für solche Gemische, die bei der destillativen Auftrennung von Phosgenierungsprodukten von Anilin/Formaldehyd-Kondensaten als Destillationsrückstand anfallen, sowie deren beliebige Abmischungen mit anderen Polyisocyanaten der Diphenylmethanreihe.

Besonders bevorzugt werden als antrimerisiertes Polyisocyanat Gemische aus Polyisocyanat und dessen Polyisocyanurat auf Diphenylmethandiisocyanat(MDI)basis (z.B. 4,4'-MDI, 2,4'-MDI, 2,2'-MDI und deren Abmischungen), gegebenenfalls in Abmischung mit deren höheren Homologen (poly-MDI) eingesetzt.

Die vorgenannten Polyisocyanate können auch biologischen Ursprungs sein und/oder auf fermentativem Weg erhalten werden.

Die Isocyanat-reaktive Komponente A) enthält eine Polyolkomponente ausgewählt aus der Gruppe bestehend aus Polyesterpolyolen, Polyetheresterpolyolen, Polycarbonatpolyole und/oder Polyether-Polycarbonatpolyole. Weitere geeignete Isocyanat-reaktive Komponenten sind insbesondere Polyamine.

Besonders bevorzugt werden als Isocyanat-reaktive Komponente A) Polyetheresterpolyole, Polyamine und/oder Polyesterpolyole eingesetzt.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

"Funktionalität" bezeichnet im Rahmen der vorliegenden Erfindung die theoretische, aus den bekannten Einsatzstoffen und deren Mengenverhältnissen berechnete zahlenmittlere Funktionalität (Anzahl an gegenüber Isocyanaten bzw. gegenüber Polyolen oder Polyaminen reaktiven Funktionen im Molekül).

Geeignete Polyesterpolyole sind unter anderem Polykondensate aus Di-, Tri- und/oder Tetraolen und Di-, Tri- und/oder Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole zur Herstellung von Polyesterpolyolen sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Die vorgenannten Diole und Polyole können auch biologischen Ursprungs sein und/oder auf fermentativem Weg erhalten werden.

Als Polycarbonsäuren zur Herstellung von Polyesterpolyolen können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden. Die vorgenannten Säuren können auch biologischen Ursprungs sein und/oder auf fermentativem Weg erhalten werden.

Sofern die zahlenmittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Vorzugsweise besitzen die Polyesterpolyole eine zahlenmittlere Funktionalität von ≥1,8 bis ≤6, besonders bevorzugt von ≥ 2 bis ≤ 4 , und eine OH-Zahl von 50 bis 600 mg KOH/g, besonders bevorzugt von 200 bis 500 mg KOH/g und eine Säurezahl von 0,1 bis 5,0 mg KOH/g.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich. Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und Lacton modifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich. Die vorgenannten Einsatzstoffe können auch biologischen Ursprungs sein und/oder auf fermentativem Weg erhalten werden.

Als weitere Komponente zur Herstellung der Polyetheresterpolyole können Polyetherpolyole eingesetzt werden, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten $M_n$ von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können als Startermoleküle für die Herstellung der Polyether auch Polyole mit zahlenmittleren Funktionalitäten von > 2 bis ≤ 8, insbesondere von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A beschrieben.

Besonders bevorzugt besteht das eingesetzte Polyamin aus mindestens einem mehrfunktionellen aromatischen Amin, wie beispielsweise 4,4'-Diaminodiphenylmethan, 2,4'-Diaminodiphenylmethan, 2,2'-Diaminodiphenylmethan und oligomerem Diaminodiphenylmethan, Toluoldiamin, insbesondere Toluol-2,4-diamin und/oder Toluol-2,6-diamin, Diethyltoluoldiamin, insbesondere 3,5-Diethyltoluol-2,4-diamin und/oder 3,5-Diethyltoluol-2,6-diamin.

Besonders bevorzugt als Polyamin wird 4,4'-Diaminodiphenylmethan, 2,4'-Diaminodiphenylmethan, 2,2'-Diaminodiphenylmethan und oligomeres Diaminodiphenylmethan sowie deren Abmischungen verwendet. Oligomeres Diaminodiphenylmethan (MDA) enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden.

Die zahlenmittlere Funktionalität eines mehrfunktionellen Amins, welches oligomeres MDA enthält, kann im Bereich von ungefähr 2,3 bis ungefähr 5 variieren, insbesondere von 2,5 bis 3,5 und besonders bevorzugt von 2,5 bis 3. Eine solche Mischung von MDA-basierten mehrfunktionellen Aminen mit unterschiedlichen Funktionalitäten ist insbesondere das sogenannte Roh-MDA, das insbesondere bei der Kondensation von Anilin mit Formaldehyd, üblicherweise katalysiert durch Salzsäure, als Zwischenprodukt bei der Herstellung von Roh-MDI entsteht. Bevorzugt enthält die Polyaminkomponente oligomeres Diaminodiphenylmethan und weist eine Funktionalität von mindestens 2,5 auf.

Weiterhin können in der Isocyanat-reaktiven Komponente A) polyfunktionelle Amine, Alkohole und Hydroxyamine, insbesondere Diole, Triole und/oder Triethanolamin mit Molekulargewichten kleiner als 400 g/mol, vorzugsweise von 80 bis 300 g/mol, zum Einsatz kommen.

Die Erfindung soll anhand der nachfolgenden Beispiele näher erläutert werden.

**Beispiele:**

Ausgangsmaterialien:

Amin 1: 4,4'-MDA (4,4'-Diaminodiphenylmethan)

Katalysator 1 (Kat1): "Desmorapid® 726b"; Polyurethankatalysator Cyclohexyldimethylamin Katalysator 2 (Kat2): "Polycat 41"; Polyurethan/Trimerisierungskatalysator 1,3,5-Tris(3-(dimethylamino)propyl)-s-hexahydrotriazin

Isocyanatkomponente 1 (Iso1): Desmodur® 44M von Covestro Deutschland AG, 4,4'-Diphenylmethandiisocyanat mit einem NCO-Gehalt von 33,6 Gew.-%

Isocyanatkomponente 2 (Iso2): Desmodur® 44V20L von Covestro Deutschland AG, technisches Diphenylmethandiisocyanat mit einem NCO-Gehalt von 31,5 Gew.-% und einer Viskosität bei 25°C von ca. 200mPas

Polyol 1: Polyesterpolyol 1 mit einer OH-Zahl von 408,5 mgKOH/g

Die nachfolgenden Prozentangaben sind Gewichtsprozente.

Herstellung von Polyol 1

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 773 g (6,55 Mol) Bernsteinsäure, 261 g (4,21 Mol) Monoethylenglykol, 447 g (4,21 Mol) Diethylenglykol und 255 g (1,88 Mol) Pentaerythrit vorgelegt und unter Stickstoffüberschleierung im Verlauf von 60 min. auf 200 °C erhitzt, wobei Reaktionswasser abdestillierte. Nach 2 Stunden kam die Bildung von Reaktionswasser zum Erliegen. Man kühlte auf ca. 80 °C ab und gab 30 mg Zinn-II-chlorid-dihydrat zu, erhöhte die Temperatur auf 200 °C und senkte anschließend den Druck schrittweise im Verlauf von 100 Minuten auf 300 mbar. Unter diesen Reaktionsbedingungen vervollständigte man die Umsetzung im Verlaufe weiterer 35 Stunden. Man bestimmte die Hydroxylzahl des Zwischenproduktes zu 302,5 mg KOH/g bei einer Säurezahl von 1,5 mg KOH/g. Unbeabsichtigt abdestilliertes Monoethylengylkol wurde durch Nachsatz von 103,8 g (1,73 Mol) Monoethylenglykol, welches durch 4-stündiges Erhitzen bei 200 °C und Normaldruck eingeestert wurde, ausgeglichen.

Analyse des Polyesterpolyols:

> Hydroxylzahl:     408,5 mg KOH/g
> Säurezahl:        0,76 mg KOH/g
> Viskosität:       225 mPas (bei 75 °C), 890 mPas (bei 50 °C), 7470 mPas (bei 25 °C)

Die rechnerische Funktionalität beträgt 3.

Hydroxylzahl: Die Bestimmung der OH-Zahl erfolgte gemäß der Vorschrift der DIN 53240-1 (Verfahren ohne Katalysator, Fassung von Juni 2013).

Säurezahl: Die Säurezahl wurde gemäß DIN EN ISO 2114 (Juni 2002) bestimmt.

Viskosität: Dynamische Viskosität: Rheometer MCR 51 der Firma Anton Paar entsprechend DIN 53019-1 (Fassung von September 2008) mit einem Messkegel CP 50-1, Durchmesser 50 mm, Winkel 1° bei Scherraten von 25, 100, 200 und 500 s-1.

Herstellung einer Isocyanatmischung A1 (Isocyanatmischung vor Trimerisierung)

Iso1 und Iso2 (Ansatzgröße 3 kg, Gewichtsverhältnis 40:60) wurden in einen 5-1-Dreihalskolben mit Rührer unter Stickstoff überführt und bei Raumtemperatur homogenisiert. Diese Mischung weist eine Viskosität von ca. 25 mPas bei 25°C und einen Isocyanatgehalt von 32,7 Gew.-% auf.

Herstellung des antrimerisierten Polyisocyanates A2 (Isocyanat/Isocyanurat-Gemisch)

Die, wie oben beschrieben, hergestellte Isocyanatmischung A1 wurde unter Stickstoff auf eine Temperatur von 60-80°C aufgeheizt und unter Katalyse mit 2,4,6-Tris(dimethylaminomethyl)phenol (1500ppm) einer Trimerisierungsreaktion unterworfen. In zeitlichen Intervallen von etwa 15 Minuten wurden dem Reaktionsgemisch Proben zur Bestimmung des Isocyanatgehalts entnommen. Eine unter den Reaktionsbedingungen zeitlich lineare Abnahme des NCO-Werts ermöglichte eine gute Abschätzung der notwendigen Reaktionszeit (ca. 2h) bis zum Erreichen des Ziel-NCO-Werts. Die Reaktion wurde durch Zugabe von Benzoylchlorid (300 ppm) bei Erreichen eines Isocyanatgehalts von 26,9 Gew.-% abgestoppt.

Der Isocyanuratgehalt des so hergestellten Isocyanat/Isocyanuratgemisches A2 wurde aus der NCO-Abnahme nach folgender Rechnung bestimmt:

$$\text{Isocyanuratgehalt in Gew.-\% von (A2)} = (\text{Isocyanatgehalt in Gew.-\% des Isocyanatgemisches (A1)}$$
$$- \text{Isocyanatgehalt des antrimerisierten Polyisocyanates (A2) in Gew.-\% am Reaktionsende }) /$$
$$(\text{Isocyanatgehalt in Gew.-\% von (A1) }/2) *100$$

Der Isocyanuratgehalt von (A2) beträgt 35,6 Gew.-%, und die Viskosität beträgt 2800 mPas bei 25°C.

Herstellung der porösen Materialien auf Polyurethan- und Polyharnstoff-Basis

Die porösen Materialien wurden über die Herstellung von im Lösungsmittel gequollenen Polymer-Gelen und anschließender Trocknung unter Normalbedingungen erhalten. Für die Herstellung der Gele wurden zuerst aus den verschiedenen oben genannten Komponenten jeweils verdünnte Lösungen (ca. 10-20 Gew.-%) unter Verwendung von Aceton als Lösungsmittel hergestellt. Diese Lösungen wurden dann in verschiedenen Kombinationen miteinander vereint, so dass sich die in der Tabelle angegebenen Rezepturen ergaben. Anschließend wurde Aceton bis zur gewünschten Verdünnungsstufe hinzugegeben.

Bei der Herstellung der "Polyharnstoff"-Gele wurde kein Katalysator verwendet.

Bei der Herstellung der "Polyurethan"-Gele wurde zuerst ein Urethanisierungskatalysator (Katalysator 1) zugegeben, sowie nach einer bestimmten Zeit (1 h) ein weiterer Katalysator (Isocyanurat-Katalysator: Katalysator 2) zugesetzt.

Zuerst wurde eine Eintrübung beobachtet, anschließend erfolgte die Gelierung. Das entstandene Gel wurde über Nacht gealtert und anschließend durch Verdampfen des Lösungsmittels bei Raumtemperatur innerhalb von 7 Tagen getrocknet.

Die Gele wurden in zylindrischen PE-Gefäßen mit einem Durchmesser von 60mm und einer Höhe von 150mm hergestellt. Die Gelkörper wurden 24h nach Herstellung aus den Zylindern entnommen und während 7 Tagen bei Raumtemperatur getrocknet. Der Volumenschwund in [%] bezieht sich auf das Volumen des Gelkörpers (Halbmesser$^2$ x Gelhöhe) bezogen auf die Dimension der Form (Halbmesser$^2$ x Füllhöhe).

Die Dichte des Gelkörpers wurde nach der Trocknungszeit von 7 Tagen durch Ausmessen des Gelkörpervolumens (s. o.) und Auswiegen des Körpers bestimmt.

Als Index wird das mit 100 multiplizierte Verhältnis von Isocyanatgruppen zu gegenüber Isocyanatgruppen reaktiven Gruppen bezeichnet:

$$\text{Index} = (\text{Mol}_{\text{Isocyanat-Gruppen}} / \text{Mol}_{\text{Isocyanat-reaktive Gruppen}}) * 100$$

Tabelle

| Beispiel | 1 | 2 | 3 | 4* | 5* | 6* | 7* |
|---|---|---|---|---|---|---|---|
| Isocyanatmischung A2 (20% in Aceton) | 32,0 g | 48,0 g | 51,62 g | / | / | / | / |
| Iso 1 (20% in Aceton) | / | / | / | / | / | / | 44,0 g |
| Iso 2 (20% in Aceton) | / | / | / | 30,2 g | 45,3 g | 49,05 g | / |
| Polyoll (10% in Aceton) | / | / | 45,33 g | / | / | / | / |
| Polyoll (20% in Aceton) | / | / | / | / | / | 25,15 g | / |
| Amin 1 (20% in Aceton) | 18,0 g | 27,0 g | / | 19,8 g | 29,7 g | / | 31,0 g |
| Kat1 (1% in Aceton) | / | / | 1,43 g | / | / | 1,58 g | / |
| Kat2 (10% in Aceton) | / | / | 1,29 g | / | / | 1,44 g | / |
| Aceton | 50,0 g | 25,0 g | 0,33 g | 50,0 g | 25,0 g | 22,78 g | 25,0 g |
| Summe | 100 g | 100 g | 100 g | 100 g | 100 g | 100 g | 100 g |
| Index [NCO:OH] | 120 | 120 | 200 | 120 | 120 | 200 | 120 |
| Konzentration [Gew.-%] | 10 | 15 | 15 | 10 | 15 | 15 | 15 |
| Ergebnisse | | | | | | | |
| Volumenschwund [%] | 33 | 24 | 53 | 52 | 46 | 80 | / |
| Dichte [kg/m$^3$] | 117 | 155 | 244 | 180 | 240 | 730 | / |
| *Vergleich | | | | | | | |

Beispiel 1 (erfindungsgemäß):

Wie oben beschrieben wurde eine 20%ige Lösung aus Isocyanatmischung A2 (32,0 g) sowie eine 20%ige Lösung von Amin 1 (18,0 g) zusammengegeben und nach Zugabe von weiterem Aceton (50 g, wodurch 100 g einer Lösung mit einer Gesamtkonzentration von 10% erhalten wurde), unter Stehenlassen geliert. Das Gel wurde über Nacht gealtert und anschließend durch Verdampfen des Lösungsmittels bei Raumtemperatur innerhalb von 7 Tagen getrocknet. Man erhielt ein festes poröses Material, welches einen Volumenschwund von 33% gegenüber dem Lösemittelhaltigen Gel zeigte, sowie eine Dichte von 117 g/m$^3$ aufwies.

Beispiel 2 (erfindungsgemäß):

Wie oben beschrieben wurde eine 20%ige Lösung aus Isocyanatmischung A2 (48,0 g) sowie eine 20%ige Lösung von Amin 1 (27,0 g) zusammengegeben und nach Zugabe von weiterem Aceton (25 g, wodurch 100 g einer Lösung mit einer Gesamtkonzentration von 15% erhalten wurde), unter Stehenlassen geliert. Das Gel wurde über Nacht gealtert und anschließend durch Verdampfen des Lösungsmittels bei Raumtemperatur innerhalb von 7 Tagen getrocknet. Man erhielt ein festes poröses Material, welches einen Volumenschwund von 24% gegenüber dem Lösemittelhaltigen Gel zeigte, sowie eine Dichte von 155 g/m$^3$ aufwies.

Beispiel 3 (erfindungsgemäß):

Wie oben beschrieben wurde eine 20%ige Lösung aus Isocyanatmischung A2 (51,62 g), eine 10%ige Lösung von Polyol 1 (45,33 g), sowie eine 1%ige Lösung von Kat1 (1,43 g) zusammengegeben und nach Zugabe von weiterem Aceton (0,33 g, wodurch 98,71 g einer Lösung mit einer Gesamtkonzentration von ca. 15% erhalten wurde) während 1 h belassen. Anschließend wurde eine 10%ige Lösung von Kat2 (1,29 g) hinzugegeben und die entstandene Lösung unter Stehenlassen geliert. Das Gel wurde über Nacht gealtert und anschließend durch Verdampfen des Lösungsmittels bei Raumtemperatur innerhalb von 7 Tagen getrocknet.
Man erhielt ein festes poröses Material, welches einen Volumenschwund von 53% gegenüber dem Lösemittelhaltigen Gel zeigte, sowie eine Dichte von 244 g/m$^3$ aufwies.

Beispiel 4 (Vergleich):

Wie oben beschrieben wurde eine 20%ige Lösung aus Iso2 (30,2 g) sowie eine 20%ige Lösung von Amin 1 (19,8 g) zusammengegeben und nach Zugabe von weiterem Aceton (50 g, wodurch 100 g einer Lösung mit einer Gesamtkonzentration von 10% erhalten wurde), unter Stehenlassen geliert. Das Gel wurde über Nacht gealtert und anschließend durch Verdampfen des Lösungsmittels bei Raumtemperatur innerhalb von 7 Tagen getrocknet.
Man erhielt ein festes poröses Material, welches einen Volumenschwund von 52% gegenüber dem Lösemittelhaltigen Gel zeigte, sowie eine Dichte von 180 g/m$^3$ aufwies.

Beispiel 5 (Vergleich):

Wie oben beschrieben wurde eine 20%ige Lösung aus Iso2 (45,3 g) sowie eine 20%ige Lösung von Amin 1 (29,7 g) zusammengegeben und nach Zugabe von weiterem Aceton (25 g, wodurch 100 g einer Lösung mit einer Gesamtkonzentration von 15% erhalten wurde), unter Stehenlassen geliert. Das Gel wurde über Nacht gealtert und anschließend durch Verdampfen des Lösungsmittels bei Raumtemperatur innerhalb von 7 Tagen getrocknet.
Man erhielt ein festes poröses Material, welches einen Volumenschwund von 46% gegenüber dem Lösemittelhaltigen Gel zeigte, sowie eine Dichte von 240 g/m$^3$ aufwies.

Beispiel 6 (Vergleich):

Wie oben beschrieben wurde eine 20%ige Lösung aus Iso2 (49,05 g), eine 20%ige Lösung von Polyol 1 (25,15 g), sowie eine 1%ige Lösung von Kat1 (1,58 g) zusammengegeben und nach Zugabe von weiterem Aceton (0,33 g, wodurch 98,71 g einer Lösung mit einer Gesamtkonzentration von ca. 15% erhalten wurde) während 1 Stunde belassen. Anschließend wurde eine 10%ige Lösung von Kat2 (1,44 g) hinzugegeben und die entstandene Lösung unter Stehenlassen geliert. Das Gel wurde über Nacht gealtert und anschließend durch Verdampfen des Lösungsmittels bei Raumtemperatur innerhalb von 7 Tagen getrocknet.
Man erhielt ein festes poröses Material, welches einen Volumenschwund von 80% gegenüber dem Lösemittelhaltigen Gel zeigte, sowie eine Dichte von 730 g/m$^3$ aufwies.

Beispiel 7 (Vergleich):

Wie oben beschrieben wurde eine 20%ige Lösung aus Iso1 (44,0 g) sowie eine 20%ige Lösung von Amin 1 (31,0 g) zusammengegeben und nach Zugabe von weiterem Aceton (25 g, wodurch 100 g einer Lösung mit einer Gesamtkonzentration von 15% erhalten wurde), über Nacht belassen.

Man erhielt einen weißen Niederschlag anstelle eines Gels.

Wie aus den Beispielen hervorgeht, führt die Verwendung von antrimerisierten Polyisocyanaten (A2), erhalten aus der Umsetzung von Iso1 und Iso2, sowohl bei "Polyharnstoff"-Gelen als auch bei "Polyurethan"-Gelen zu einem stark verminderten Volumenschrumpf während der Trocknung und somit auch zu resultierenden porösen Materialien mit verminderten Dichten und daher höheren Porositäten im Vergleich zu porösen Materialien, welche mit nicht antrimerisierten Isocyanaten (Iso2) hergestellt wurden. Weiterhin zeigen die Beispiele, dass eine Verwendung von monomeren Diisocyanaten (Iso1) in Kombination mit Amin1 nicht zu einer Gelbildung führt.

**Patentansprüche**

1. Xerogele, Aerogele, Kryogele und Lyogele auf Basis eines Polyurethan- Polyisocyanuratgemisches oder eines Polyharnstoff- Polyisocyanuratgemisches mit einer Dichte von $\leq 250$ kg/ m$^3$, wobei das Gemisch aus einem Reaktionsgemisch bestehend aus den folgenden Komponenten erhältlich ist

   i) mindestens einer Isocyanat reaktiven Komponente aus der Gruppe bestehend aus Polyaminen mit einer zahlenmittleren Funktionalität von $\geq 2$ bis $\leq 6,5$ und einem zahlenmittleren Molekulargewicht von 100 bis 1000g/mol, Polyesterpolyolen mit einer zahlenmittleren Funktionalität von $\geq 1,8$ bis $\leq 6,5$ und einer Hydroxylzahl von 50 bis 600 mgKOH/g, Polyetheresterpolyolen mit einer zahlenmittleren Funktionalität von $\geq 1,8$ bis $\leq 6,5$ und einer Hydroxylzahl von 50 bis 600 mgKOH/g und Polycarbonatpolyolen mit einer Funktionalität von 2 und einer Hydroxylzahl von 50 bis 600 mgKOH/g und Kombinationen daraus,
   ii) mindestens einem antrimerisierten Polyisocyanat mit einem Isocyanuratgehalt von 15 bis 95 %, bezogen auf die Summe der Anzahl der Isocyanatgruppen und der Isocyanuratgruppen, aus der Gruppe bestehend aus Diphenylmethandiisocyanat (MDI), dessen Isomeren und höheren Homologen (pMDI) sowie Mischungen daraus, Toluoldiisocyanat (TDI) und dessen Isomeren und Gemischen daraus, 1,6-Hexamethylendiisocyanat (HDI), Isophorondiisocyanat (IPDI), hydriertes Dipenylmethandiisocyanat (HMDI), dessen Isomeren und höheren Homologen sowie Mischungen daraus, 1,5-Pentandiisocyanat (PDI) und 1,3-Xylendiisocyanat (XDI) sowie Abmischungen aus den Komponenten der Gruppe,
   iii) gegebenenfalls polyfunktionellen Aminen, Alkoholen und Hydroxyaminen mit Molekulargewichten kleiner als 400 g/mol,
   in Gegenwart von
   iv) gegebenenfalls einem oder mehreren Urethanisierungskatalysatoren
   v) gegebenenfalls einem oder mehreren Trimerisierungskatalysatoren ,

   wobei die NCO-Kennzahl (das Verhältnis der Anzahl der NCO-Gruppen zu der Anzahl an OH-Gruppen multipliziert mit 100) bei Einsatz von Polyolen als Komponente (i) 200 bis 600 beträgt und die NCO-Kennzahl (das Verhältnis der Anzahl der NCO-Gruppen zu der Anzahl an Amin-Gruppen multipliziert mit 100) bei Einsatz von Polyaminen als Komponente (i) 100 bis 150 beträgt.

2. Xerogele, Aerogele, Kryogele und Lyogele gemäß Anspruch 1, wobei die mindestens eine Isocyanat reaktive Komponente mindestens ein Polyamin mit einer zahlenmittleren Funktionalität von $\geq 2$ bis $\leq 4$ und einem zahlenmittleren Molekulargewicht von 100 bis 400 g/mol ist.

3. Xerogele, Aerogele, Kryogele und Lyogele gemäß Anspruch 1, wobei die mindestens eine Isocyanat reaktive Komponente mindestens ein Polyesterpolyol mit einer zahlenmittleren Funktionalität von $\geq 2$ bis $\leq 6$ und einer Hydroxylzahl von 200 bis 500 mg KOH/g ist.

4. Sol-Gel-Verfahren zur Herstellung der Xerogele, Aerogele, Kryogele und Lyogele auf Basis eines Polyurethan-Polyisocyanuratgemisches oder eines Polyharnstoff-Polyisocyanuratgemisches gemäß Anspruch 1, 2 oder 3, wobei

   a) die Komponenten i) und ii) in einem organischen, trockenen, inerten Lösungsmittel oder Lösungsmittelgemisch vermischt werden,
   b) gegebenenfalls der Mischung aus Schritt a) die Komponente iii) zugegeben wird,
   c) gegebenenfalls zur Mischung aus Schritt b) die Komponente iv) und danach gegebenenfalls die Komponente v) zugegeben wird, so dass sich ein Gel ausbildet,
   d) das in Schritt c) gebildete Gel durch Stehenlassen gealtert wird,

e) das organische Lösungsmittel entfernt wird.

5. Verwendung der Xerogele, Aerogele, Kryogele und Lyogele gemäß Anspruch 1 zur Herstellung von Dämmmaterialien, Kernmaterialien für Vakuumisolationspaneele und Absorbentien.

**Claims**

1. Xerogels, aerogels, cryogels and lyogels based on a polyurethane-polyisocyanurate mixture or a polyurea-polyisocyanurate mixture and having a density of $\leq 250$ kg/m$^3$, wherein the mixture is obtained from a reaction mixture consisting of the following components

    i) at least one isocyanate-reactive component from the group consisting of polyamines having a number average functionality of from $\geq 2$ to $\leq 6.5$ and a number average molecular weight of from 100 to 1000 g/mol, polyester polyols having a number average functionality of from $\geq 1.8$ to $\leq 6.5$ and a hydroxyl number of from 50 to 600 mg KOH/g, polyether ester polyols having a number average functionality of from $\geq 1.8$ to $\leq 6.5$ and a hydroxyl number of from 50 to 600 mg KOH/g and polycarbonate polyols having a functionality of 2 and a hydroxyl number of from 50 to 600 mg KOH/g and combinations thereof,
    ii) at least one partially trimerized polyisocyanate having an isocyanurate content of from 15 to 95%, based on the sum of the number of isocyanate groups and isocyanurate groups, from the group consisting of diphenylmethane diisocyanate (MDI), the isomers thereof and higher homologues thereof (pMDI) and also mixtures thereof, toluylene diisocyanate (TDI) and isomers and mixtures thereof, 1,6-hexamethylene diisocyanate (HDI), isophorone diisocyanate (IPDI), hydrogenated diphenylmethane diisocyanate (HMDI), the isomers and higher homologues thereof, pentane 1,5-diisocyanate (PDI) and xylene 1,3-diisocyanate (XDI) and also blends of the components of this group,
    iii) optionally polyfunctional amines, alcohols and hydroxyamines having molecular weights of less than 400 g/mol,
    in the presence of
    iv) optionally one or more urethaneization catalysts
    v) optionally one or more trimerization catalysts, where the NCO index (the ratio of the number of NCO groups to the number of OH groups multiplied by 100) when using polyols as component (i) is from 200 to 600 and the NCO index (the ratio of the number of NCO groups to the number of amine groups multiplied by 100) when using polyamines as component (i) is from 100 to 150.

2. Xerogels, aerogels, cryogels and lyogels according to Claim 1, wherein the at least one isocyanate-reactive component is at least one polyamine having a number average functionality of from $\geq 2$ to $\leq 4$ and a number average molecular weight of from 100 to 400 g/mol.

3. Xerogels, aerogels, cryogels and lyogels according to Claim 1, wherein the at least one isocyanate-reactive component is at least one polyester polyol having a number average functionality of from $\geq 2$ to $\leq 6$ and a hydroxyl number of from 200 to 500 mg KOH/g.

4. Sol-gel process for producing the xerogels, aerogels, cryogels and lyogels based on a polyurethane-polyisocyanurate mixture or a polyurea polyisocyanurate mixture according to Claim 1, 2 or 3, wherein

    a) the components i) and ii) are mixed in an organic, dry, inert solvent or solvent mixture,
    b) the component iii) is optionally added to the mixture from step a),
    c) optionally the component iv) and then optionally the component v) is/are added to the mixture from step b) so as to form a gel,
    d) the gel formed in step c) is aged by being allowed to stand,
    e) the organic solvent is removed.

5. Use of the xerogels, aerogels, cryogels and lyogels according to Claim 1 for producing insulation materials, core materials for vacuum insulation panels and absorbents.

**Revendications**

1. Xérogels, aérogels, cryogels et lyogels à base d'un mélange polyuréthane-polyisocyanurate ou d'un mélange polyurée-polyisocyanurate dotés d'une densité de ≤ 250 kg/m³, le mélange pouvant être obtenu à partir d'un mélange de réaction constitué des composants suivants

   i) au moins un composant réactif envers un isocyanate du groupe constitué par des polyamines dotées d'une fonctionnalité moyenne en nombre de ≥ 2 à ≤ 6,5 et d'un poids moléculaire moyen en nombre de 100 à 1 000 g/mole, des polyesterpolyols dotés d'une fonctionnalité moyenne en nombre de ≥ 1,8 à ≤ 6,5 et d'un indice d'hydroxyle de 50 à 600 mg de KOH/g, des polyétheresterpolyols dotés d'une fonctionnalité moyenne en nombre de ≥ 1,8 à ≤ 6,5 et d'un indice d'hydroxyle de 50 à 600 mg de KOH/g et des polycarbonatepolyols dotés d'une fonctionnalité de 2 et d'un indice d'hydroxyle de 50 à 600 mg de KOH/g et des combinaisons correspondantes,
   ii) au moins un polyisocyanate trimérisé doté d'une teneur en isocyanurate de 15 à 95 %, par rapport à la somme du nombre de groupes isocyanate et de groupes isocyanurate, du groupe constitué par un diisocyanate de diphénylméthane (MDI), ses isomères et ses homologues supérieurs (pMDI) ainsi que des mélanges de ceux-ci, un diisocyanate de toluène (TDI) et ses isomères et des mélanges correspondants, le 1,6-diisocyanate d'hexaméthylène (HDI), un diisocyanate d'isophorone (IPDI), un diisocyanate de diphénylméthane hydrogéné (HMDI), ses isomères et homologues supérieurs ainsi que des mélanges de ceux-ci, le 1,5-diisocyanatopentane (PDI) et un 1,3-diisocyanate de xylène (XDI) ainsi que des mélanges des composants du groupe,
   iii) éventuellement des amines, des alcools et des hydroxy amines polyfonctionnel(le)s doté(e)s de poids moléculaires inférieurs à 400 g/mole,
   en présence de
   iv) éventuellement un ou plusieurs catalyseurs de formation d'uréthane
   v) éventuellement un ou plusieurs catalyseurs de trimérisation,

   l'indice de NCO (le rapport du nombre de groupes NCO sur le nombre de groupes OH, multiplié par 100), lors de l'utilisation de polyols en tant que composant (i), étant de 200 à 600 et l'indice de NCO (le rapport du nombre de groupes NCO sur le nombre de groupes amine, multiplié par 100), lors de l'utilisation de polyamines en tant que composant (i) étant de 100 à 150.

2. Xérogels, aérogels, cryogels et lyogels selon la revendication 1, l'au moins un composant réactif envers un isocyanate étant au moins une polyamine dotée d'une fonctionnalité moyenne en nombre de ≥ 2 à ≤ 4 et d'un poids moléculaire moyen en nombre de 100 à 400 g/mole.

3. Xérogels, aérogels, cryogels et lyogels selon la revendication 1, l'au moins un composant réactif envers un isocyanate étant au moins un polyesterpolyol doté d'une fonctionnalité moyenne en nombre de ≥ 2 à ≤ 6 et d'un indice d'hydroxyle de 200 à 500 mg de KOH/g.

4. Procédé sol-gel pour la préparation des xérogels, aérogels, cryogels et lyogels à base d'un mélange polyuréthane-polyisocyanurate ou d'un mélange polyurée-polyisocyanurate selon la revendication 1, 2 ou 3,

   a) les composants i) et ii) étant mélangés dans un solvant ou mélange de solvants organique, sec, inerte,
   b) éventuellement le composant iii) étant ajouté au mélange de l'étape a),
   c) éventuellement le composant iv) étant ajouté au mélange de l'étape b) et ensuite éventuellement le composant v) étant ajouté, de sorte qu'un gel soit formé,
   d) le gel formé dans l'étape c) étant vieilli en laissant reposer,
   e) le solvant organique étant éliminé.

5. Utilisation des xérogels, aérogels, cryogels et lyogels selon la revendication 1 pour la préparation de matériaux d'isolation, de matériaux de cœur pour des panneaux d'isolation sous vide et d'absorbants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19505046 A
- WO 08138978 A
- US 4218543 A
- DE OS3914718 A
- EP 2910585 A
- EP 1359177 A
- WO 2010043624 A

**In der Beschreibung aufgeführte Nicht-Patentliteratur**

- Katalysatoren sind im Kunststoffhandbuch. Polyurethane. Carl Hanser Verlag, München/Wien, 1993, vol. 7, 95-119
- Chemistry and Technology of Polyols for Polyurethanes. Rapra Technology Limited, 2005, 55